# EUROPEAN PATENT SPECIFICATION

(11) **EP 2 735 457 B1**
(45) Date of publication and mention of the grant of the patent: **23.09.2015**
(21) Application number: 13194472.0
(22) Date of filing: 26.11.2013
(51) Int. Cl.: B60C 25/05

(54) **tyre changing apparatus**
Reifenwechselgerät
Appareil pour changer des pneus

(30) Priority: 27.11.2012 CN 201220632778 U; 31.07.2013 CN 201320462468 U
(43) Date of publication of application: 28.05.2014
(73) Proprietor: Sino-Italian Taida (Yingkow) Garage Equipment Co., Ltd., 115000 Yingkou City Liaoning (CN)
(72) Inventor: Wang, Xiaoguang, 115000 Yingkou City (CN); Gerzonin, Yimaii, 115000 Yingkou City (CN)
(74) Representative: Corradini, Corrado

(56) References cited:
- EP-A1- 2 174 807
- EP-A1- 2 233 325
- EP-A1- 2 524 820
- WO-A1-2010/026539

## Description

### BACKGROUND OF THE INVENTION

### 1. Technical Field

The present invention relates to structural improvements of a tyre changer.

### 2. Description of Related Art

A car tyre usually consists of a rim (metal) and a tyre (rubber). The rim has an annular flange along the periphery, and the bead of the elastic rubber tyre is tightly fastened on the annular flange. Tyre demounting is to raise the rubber tyre to the annular flange of the metal rim so as to separate the tyre from the rim (mounting is just opposite). To improve performance of the cars, the tyres are developed in the trend of small flatness ratio (ratio of the tyre section height to the tyre height) and hard wall, thus causing difficulty in tyre demounting. The traditional manual crowbar demounting mode cannot meet the development of the automobile industry, and new demounting tools and devices are required corresponding to the development of the tyre technologies. The tyre demounting device produced by Corghi (Italy) is a typical four bar mechanism with a complicated structure and having a tyre remover that easily scratches tyres. The tyre demounting device produced by Correggio (Italy) is a tyre demounting structure controlled by a cam groove and a connecting bar, and the movement track of the tyre remover thereof is a bent curve which is not fit for the geometrical shape of the tyre rim and enables the rubber tyre to deform, therefore causing damage to the tyres. Further tyre changers are known from EP 2 524 820 A1 and EP 2 174 807 A1.

In addition, regarding the technical solution employed in the Chinese patent No. 201320151629.7 in the name of "a tyre changer", the mode for fixing the air cylinder needs further improvement.

### BRIEF SUMMARY OF THE INVENTION

To solve the above problems, the invention provides a durable and compactly structured tyre changer according to the features of claim 1 actuating a tyre remover to move in a track tightly close to the rim flange and the,tyre remover to run stably.

In a preferable scheme, the upper end of the support body of the invention is provided with a joint shaft; the end of the joint shaft is provided with a first connector; the lower end of the actuator body is provided with a second connector; and the first connector and the second connector are connected through a first fastener.

In a preferable scheme, the first connector of the invention is a transverse U-shaped connector; the two walls of the U-shaped connector are correspondingly provided with first transverse connecting holes; the second connector adopts two lugs; the lower ends of the lugs are provided with second transverse connecting holes corresponding to the first transverse connecting holes, while the upper ends of the lugs are provided with vertical connecting holes; and the lugs are connected to the actuator body through a second fastener on the actuator body and the vertical connecting holes.

In a preferable scheme, the actuator of the invention is an air cylinder, and the shaft sleeve at the lower end of the piston rod of the air cylinder is sleeved on the first pin shaft.

In a preferable scheme, the shaft sleeve of the invention is connected to the first pin shaft through a joint bearing.

In a preferable scheme, the lower end of the clamp plate structure of the is connected to a rim fixing head through a third fastener.

In a preferable scheme, the rim fixing head of the is provided with a connecting hole connected to the lower end of a movable arm.

Moreover, the air cylinder body of the is provided with a housing; a control valve of the air cylinder is located in the housing; and an exit hole for an operating rod of the control valve of the air cylinder and a handle are disposed at the housing.

In addition, the upper and lower surfaces of the hook-shaped lower portion of the lower end of the tyre remover of the are smooth oval heads.

The has the following beneficial effects:
First, the clamp plate structure of the is provided with two arc-shaped guide slots for the tyre remover; the guide slots guide the tyre remover to slide between the rim flange and the tyre bead along the contour of the rim flange, and the two guide slots for the tyre remover are vertically arrayed. The two arc-shaped guide slots for the tyre remover control the movement track of the lower end of the tyre remover so the movement track of the tyre remover can be tightly close to the flange shape of the rim, and the tyre remover does not damage the tyre in use.
Second, the upper end of the clamp plate structure is provided with the support body, and the upper end of the support body is connected to the lower end of the vertical actuator body of the tyre remover, so the tyre change has a compact structure, the product rigidity is improved, and elastic deformation is effectively restrained in use.
And third, the tyre changer according to the invention is simple in structure, low in cost, easy to manufacture, convenient to install and use, and good-looking.

### BRIEF DESCRIPTION OF THE SEVERAL VIEWS OF THE DRAWINGS

The is described in further detail with reference to the attached drawings and the embodiment.
Figure 1 is a structural view of a tyre changer according to the invention

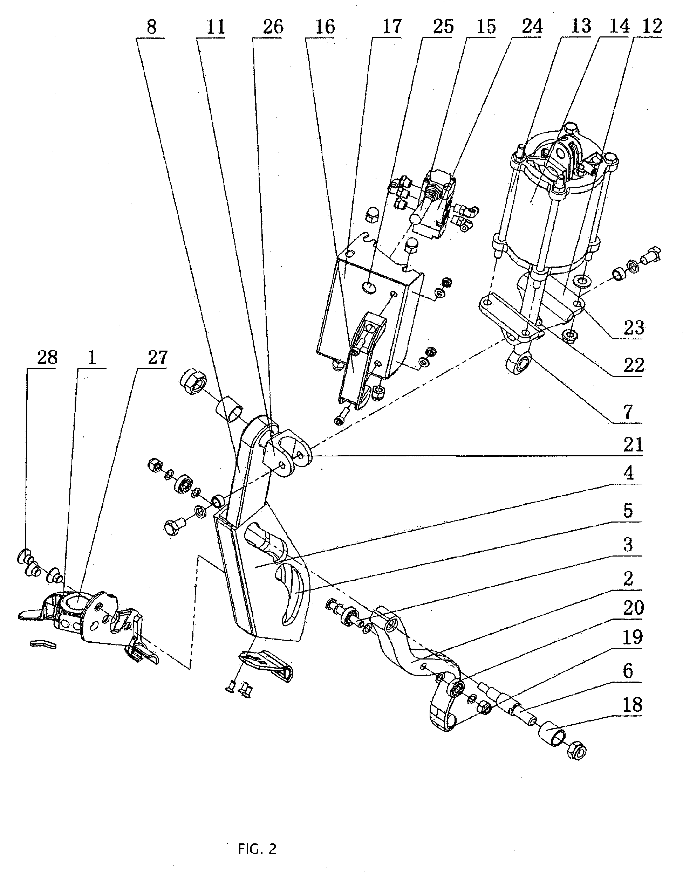

Figure 2 is an exploded view of the tyre changer according to the invention.
Figure 3 is a schematic view of comparison between the movement track of the lower end of the tyre remover according to the invention and that of an existing product.

In the figure, 1-rim fixing head, 2-tyre remover, 3-the second pin shaft, 4-clamp plate structure, 5-guide slot, 6-the first pin shaft, 7-shaft sleeve, 8-support body, 9-piston rod, 10-the first fastener, 11- U-shaped connector, 12-lug, 13-the second fastener, 14-air cylinder, 15-operating rod, 16-handle, 17-housing, 18-the first roller, 19-oval head, 20-the second roller, 21-the first transverse connecting hole, 22-the second transverse connecting hole, 23-vertical connecting hole, 24-control valve, 25-exit hole, 26-joint shaft, 27-connecting hole, 28-the third fastener, 29-movement track of the lower end of the tyre remover of the invention, 30-movement track of the lower end of the tyre remover of an existing product.

### DETAILED DESCRIPTION OF THE INVENTION

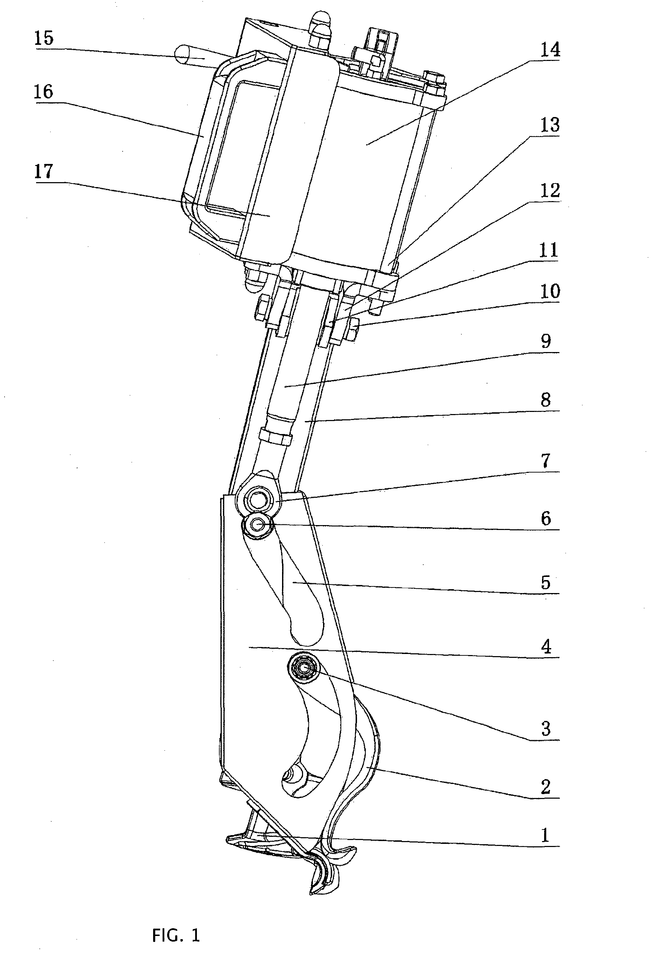

As shown in figure 1, a tyre changer comprises a clamp plate structure 4. Two side clamp plates of the clamp plate structure 4 are correspondingly provided with two arc-shaped slots 5 for a tyre remover guide 2. The guide slots guide the tyre remover 2 to slide between the rim flange and the tyre bead along the contour of the rim flange. The two guide slots 5 for the tyre remover 2 are vertically arrayed. The tyre remover 2 is located between the two side clamp plates. The upper end of the clamp plate structure 4 is provided with a support body 8, and the upper end of the support body 8 is connected to the lower end of a vertical actuator body of the tyre remover 2.

The upper end of the support body 8 is provided with a joint shaft 26; the end of the joint shaft 26 is provided with a first connector; the lower end of the actuator body is provided with a second connector; and the first connector and the second connector are connected through a first fastener 10.

The first connector is a transverse U-shaped connector 11; the two walls of the U-shaped connector 11 are correspondingly provided with first transverse connecting holes 21; the second connector adopts two lugs 12; the lower ends of the lugs 12 are provided with second transverse connecting holes 22 corresponding to the first transverse connecting holes 21, while the upper ends of the lugs 12 are provided with vertical connecting holes 23; and the lugs 12 are connected to the actuator body through a second faster 13 on the actuator body and the vertical connecting holes 23. The joint bearing 26 and the lugs 12 are used in combination, thereby effectively solving the side force when an air cylinder 14 is used and further prolonging the service life of the air cylinder 14.

The upper end of the tyre remover 2 is provided with a first pin 6; the first pin 6 is sleeved with a first roller 18; and the first roller 18 is engaged with the upper guide slots 5 for the tyre remover 2. The middle part of the tyre remover 2 is provided with a second pin shaft 3; the second pin shaft 3 is sleeved with a second roller 20; and the second roller 20 is engaged with the lower guide slots 5 for the tyre remover 2.

The actuator is an air cylinder 14, and the shaft sleeve 7 at the lower end of a piston rod 9 of the air cylinder 14 is sleeved on the first pin shaft 6.

The shaft sleeve 7 is connected to the first pin shaft 6 through a joint bearing. The joint bearing is located in the shaft sleeve 7, capable of removing the radial force of the piston rod 9.

The lower end of the clamp plate structure 4 is connected to a rim fixing head 1 through a third fastener 28. The rim fixing head 1 is conveniently demounted and changed through a fastener connection.

The rim fixing head 1 is provided with a connecting hole 27 connected to the lower end of a movable arm. The tyre changer is connected to the movable arm through the connecting hole 27, thus realizing integration of operation and control. The durable and compactly structured tyre remover which is conveniently and easily installed is suitable for not only installation of new products, but also updating of the old products.

The air cylinder 14 is provided with a housing 17. The control valve 24 of the air cylinder 14 is formed in the housing 17. An exit hole 25 for the operating rod 15 of the control valve 24 of the air cylinder 14 and a handle 16 are disposed at the housing 17. The operating rod 15 of the control valve 24 of the air cylinder 14 can control the air cylinder 14 to move in a reciprocating way. The exit hole 25 for the operating rod 15 of the control valve 24 of the air cylinder 14 and a handle 16 disposed at the housing 17 are convenient for handy operation and bring convenience to use.

The upper and lower surfaces of the hook-shaped portions of the lower end of the tyre remover 2 are a smooth ovular head 19, thereby bringing convenience to import and export of the rubber tyres during mounting and demounting and further reducing damage caused by the lower end of the tyre remover 2 to the rim and the tyre when the tyre changer is used to demount the tyre.

The mounting and working processes of the tyre changer are described with references to the attached drawings.

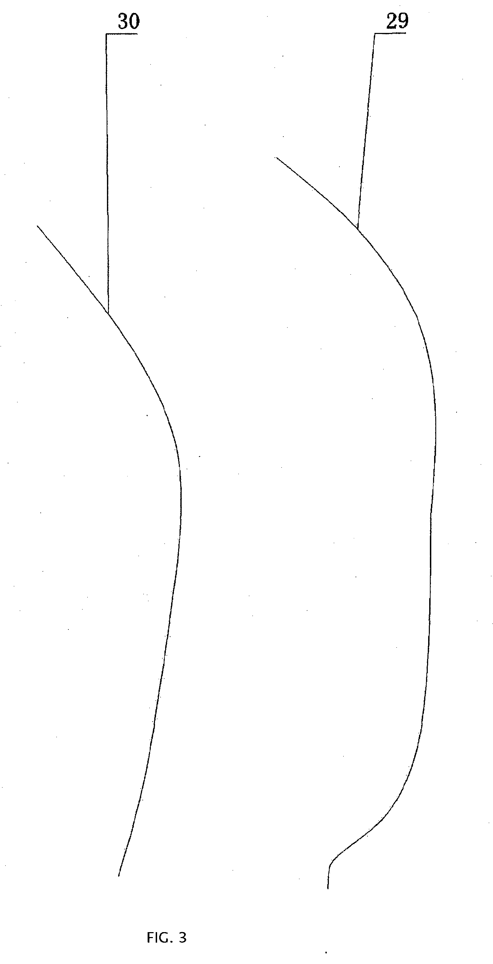

First, install the tyre changer to the movable arm of the tyre demounting machine, insert the lower end of the movable arm into the connecting hole 27 on the rim fixing head 1, and then fasten the two. The movable arm actuates the rim fixing head 1 to press the annular flange of the metal rim of a tyre, and then the lower end of the tyre remover 2 presses the annular flange and the bead. Press down the operating rod 15 of the control valve 24 of the air cylinder 14, and then the piston rod 9 of the air cylinder 14 extends out. The piston rod 9 pushes the tyre remover 2 to move downward. The tyre remover 2 moves along the track limited by the two guide slots 5 of the tyre remover 2 through the first pin shaft 6, the second pin shaft 3, the first roller 18 and the second roller 20. The lower end of the tyre remover 2 forms a track approximate to the annual flange as shown in figure 3, inserts between the annular flange of the metal rim and the tyre bead of the rubber tyre, moves continuously to the bottom, and then hooks the tyre bead.

Press up the operating rod 15 of the control valve 24 of the air cylinder 14, then the piston rod 9 of the air cylinder 14 retracts to pull the tyre remover 2 to move upward. The lower end of the tyre remover 2 hooks and lifts the tyre bead along the track until the tyre bead is raised to the annular flange. Then, rotate the tyre to separate the tyre from the rim.

The tyre mounting process is as follows: press down the operating rod 15 tyre bead along the track until the tyre bead is raised to the annular flange. Then, rotate the tyre to separate the tyre from the rim.

The tyre mounting process is as follows: press down the operating rod 15 of the control valve 24 of the air cylinder 14, and then the back oval head 19 at the lower end of the tyre remover 2 presses the tyre bead into the lower end face of the annular flange; rotate the tyre to mount the tyre on the rim; press up the operating rod 15 of the control valve 24 of the air cylinder 14, and then the tyre remover 2 rises.

## Claims

1. A durable and compactly structured tyre changer, comprising a clamp plate structure (4), two side clamp plates of the clamp plate structure (4) being correspondingly provided with two arc-shaped guide slots (5) for a tyre remover (2), the two guide slots (5) guiding the tyre remover (2) to slide between the rim flange and the tyre bead, the two guide slots (5) for the tyre remover (2) being vertically arrayed; the tyre remover (2) being located between the two side clamp plates; the upper end of the clamp plate structure (4) being provided with a support body (8), and the upper end of the support body (8) is connected to the lower end of a vertical actuator body of the tyre remover (2); **characterized in that** the upper end of the tyre remover (2) is provided with a first pin shaft (6); the first pin shaft (6) is sleeved with a first roller (18); the first roller (18) is engaged with the upper guide slots (5) for the tyre remover (2); the middle part of the tyre remover (2) is provided with a second pin shaft (3); the second pin shaft (3) is sleeved with a second roller (20); and the second roller (20) is engaged with the lower guide slots (5) for the tyre remover (2).

2. The durable and compactly structured tyre changer according to claim 1, **characterized in that** the upper end of the support body (8) is provided with a joint shaft (26); the end of the joint shaft (26) is provided with a first connector; the lower end of the actuator body is provided with a second connector; and the first connector and the second connector are connected through a first fastener (10).

3. The durable and compactly structured tyre changer according to claim 2, **characterized in that** the first connector is a transverse U-shaped connector (11); the two walls of the U-shaped connector (11) are correspondingly provided with first transverse connecting holes (21); the second connector adopts two lugs (12); the lower ends of the lugs (12) are provided with second transverse connecting holes (22) corresponding to the first transverse connecting holes (21); the upper ends of the lugs (12) are provided with upper connecting holes (23); and the lugs (12) are connected to the actuator body through a second fastener (13) and the vertical connecting holes (23).

4. The durable and compactly structured tyre changer according to claim 1, **characterized in that** the actuator is an air cylinder (14), and a shaft sleeve (7) at the lower end of a piston rod (9) of the air cylinder (14) is sleeved on the first pin shaft (6).

5. The durable and compactly structured tyre changer according to claim 4, **characterized in that** the shaft sleeve (7) is connected to the first pin shaft (6) through a joint bearing.

6. The durable and compactly structured tyre changer according to claim 1, **characterized in that** the lower end of the clamp plate structure (4) is connected to a rim fixing head (1) through a third fastener (28).

7. The durable and compactly structured tyre changer according to claim 6, **characterized in that** the rim fixing head (1) is provided with a connecting hole (27) connected to the lower end of a movable arm.

8. The durable and compactly structured tyre changer according to claim 1, **characterized in that** the body of the air cylinder (14) is provided with a housing (17); a control valve (24) of the air cylinder (14) is located in the housing (17); and an exit hole (25) for an operating rod (15) of the control valve (24) of the air cylinder (14) and a handle (16) are disposed at the housing (17).

9. The durable and compactly structured tyre changer according to claim 1, **characterized in that** the upper and lower surface of the hook-shaped portion of the tyre remover (2) are smooth oval heads (19).

## Patentansprüche

1. Haltbares und kompakt gebautes Reifenmontiergerät, das eine Klemmplattenstruktur (4) umfasst, wobei: zwei Seitenklemmplatten der Klemmplattenstruktur (4) entsprechend mit zwei bogenförmigen Führungsschlitzen (5) für einen Reifenheber (2) versehen sind, die zwei Führungsschlitze (5) den Reifenheber (2) so führen, dass er zwischen dem Felgenhorn und der Reifenwulst gleitet, die zwei Führungsschlitze (5) für den Reifenheber (2) vertikal angeordnet sind, sich der Reifenheber (2) zwischen den zwei Seitenklemmplatten befindet, das obere Ende der Klemmplattenstruktur (4) mit einem Stützkörper (8) versehen ist und das obere Ende des Stützkörpers (8) mit dem unteren Ende eines vertikalen Betätigungskörpers des Reifenhebers (2) verbunden ist, **dadurch gekennzeichnet, dass** das obere Ende des Reifenhebers (2) mit einem ersten Querbolzen (6) versehen ist, der erste Querbolzen (6) in eine erste Rolle (18) eingesetzt ist, die erste Rolle (18) mit den oberen Führungsschlitzen (5) für den Reifenheber (2) in Eingriff steht, der mittlere Teil des Reifenhebers (2) mit einem zweiten Querbolzen (3) versehen ist, der zweite Querbolzen in eine zweite Rolle (20) eingesetzt ist und die zweite Rolle (20) mit den unteren Führungsschlitzen (5) für den Reifenheber (2) in Eingriff steht.

2. Haltbares und kompakt gebautes Reifenmontiergerät nach Anspruch 1, **dadurch gekennzeichnet, dass** das obere Ende des Stützkörpers (8) mit einer Gelenkwelle (26) versehen ist, wobei: das Ende der Gelenkwelle (26) mit einem ersten Verbindungsstück versehen ist, das untere Ende des Betätigungskörpers mit einem zweiten Verbindungsstück versehen ist und das erste und das zweite Verbindungsstück durch ein erstes Befestigungsmittel (10) verbunden sind.

3. Haltbares und kompakt gebautes Reifenmontiergerät nach Anspruch 2, **dadurch gekennzeichnet, dass** das erste Verbindungsstück ein U-förmiges Verbindungsstück (11) ist, wobei: die zwei Seitenwände des U-förmigen Verbindungsstücks (11) entsprechend mit ersten Querverbindungsöffnungen (21) versehen sind, das zweite Verbindungsstück zwei Laschen (12) birgt, die unteren Enden der Laschen (12) mit zweiten Querverbindungsöffnungen (22) versehen sind, die den ersten Querverbindungsöffnungen (21) entsprechen, die oberen Enden der Laschen (12) mit oberen Verbindungsöffnungen (23) versehen sind und die Laschen (12) durch ein zweites Befestigungsmittel (13) und die vertikalen Verbindungsöffnungen (23) mit dem Betätigungskörper verbunden sind.

4. Haltbares und kompakt gebautes Reifenmontiergerät nach Anspruch 1, **dadurch gekennzeichnet, dass** das Betätigungselement ein Luftdruckzylinder (14) ist und eine Wellenhülse (7) am unteren Ende einer Kolbenstange (9) des Luftdruckzylinders (14) auf den ersten Querbolzen (6) aufgesetzt ist.

5. Haltbares und kompakt gebautes Reifenmontiergerät nach Anspruch 4, **dadurch gekennzeichnet, dass** die Wellenhülse (7) durch ein Gelenklager mit dem ersten Querbolzen (6) verbunden ist.

6. Haltbares und kompakt gebautes Reifenmontiergerät nach Anspruch 1, **dadurch gekennzeichnet, dass** das untere Ende der Klemmplattenstruktur (4) durch ein drittes Befestigungsmittel (28) mit einem Felgenarretierungskopf (1) verbunden ist.

7. Haltbares und kompakt gebautes Reifenmontiergerät nach Anspruch 6, **dadurch gekennzeichnet, dass** der Felgenarretierungskopf (1) mit einer Verbindungsöffnung (27) versehen ist, die mit dem unteren Ende eines beweglichen Arms verbindbar ist.

8. Haltbares und kompakt gebautes Reifenmontiergerät nach Anspruch 1, **dadurch gekennzeichnet, dass** der Körper des Luftdruckzylinders (14) mit einem Gehäuse (17) versehen ist, wobei sich im Gehäuse (17) ein Steuerventil (24) des Luftdruckzylinders (14) befindet und sich am Gehäuse (17) eine Austrittsöffnung (25) für eine Betätigungsstange (15) des Steuerventils (24) des Luftdruckzylinders (14) und ein Griff (16) befinden.

9. Haltbares und kompakt gebautes Reifenmontiergerät nach Anspruch 1, **dadurch gekennzeichnet, dass** die obere und unter Fläche des hakenförmigen Abschnitts des Reifenhebers (2) glatte ovale Köpfe (19) sind.

## Revendications

1. Appareil de montage de pneumatiques de structure compacte et durable comprenant une structure de plaques de serrage (4), deux plaques de serrage latérales de la structure de plaques de serrage (4) étant pourvues de manière correspondante de deux fentes de guidage en forme d'arc (5) pour un démonte-pneu (2), les deux fentes de guidage (5) guidant le démonte-pneu (2) pour glisser entre le rebord de la jante et le talon du pneumatique, les deux fentes de guidage (5) pour le démonte-pneu (2) étant déployées verticalement ; le démonte-pneu (2) étant positionné entre les deux plaques de serrage latérales ; l'extrémité supérieure de la structure de plaques de serrage (4) étant munie d'un corps de support (8), et l'extrémité supérieure du corps de support (8) est connectée à l'extrémité inférieure d'un corps d'actionneur vertical du démonte-pneu (2) ; **caractérisé en ce que** l'extrémité supérieure du démonte-pneu (2) est munie d'un premier axe de pivot (6) ; le premier axe de pivot (6) est manchonné avec un premier rouleau (18) ; le premier rouleau (18) est engagé avec les fentes de guidage supérieures (5) pour le démonte-pneu (2) ; la partie centrale du démonte-pneu (2) est munie d'un deuxième axe de pivot (3) ; le deuxième axe de pivot (3) est manchonné avec un deuxième rouleau (20) ; et le deuxième rouleau (20) est engagé avec les fentes de guidage inférieures (5) pour le démonte-pneu (2).

2. Appareil de montage de pneumatiques de structure compacte et durable selon la revendication 1, **caractérisé en ce que** l'extrémité supérieure du corps de support (8) est muni d'un axe d'articulation (26) ; l'extrémité de l'axe d'articulation (26) est munie d'un premier connecteur ; l'extrémité inférieure du corps d'actionneur est munie d'un deuxième connecteur ; et le premier connecteur et le deuxième connecteur sont connectés par l'intermédiaire d'un premier élément de fixation (10).

3. Appareil de montage de pneumatiques de structure compacte et durable selon la revendication 2, **caractérisé en ce que** le premier connecteur est un connecteur en forme de U transversal (11) ; les deux parois du connecteur en forme de U (11) sont pourvus de manière correspondante de premiers trous de connexion transversaux (21) ; le deuxième connecteur adopte deux languettes (12) ; les extrémités inférieures des languettes (12) sont pourvues de deuxièmes trous de connexion transversaux (22) correspondant aux premiers trous de connexion transversaux (21) ; les extrémités supérieures des languettes (12) sont pourvues de trous de connexion supérieurs (23) ; et les languettes (12) sont connectées au corps d'actionneur par l'intermédiaire d'un deuxième élément de fixation (13) et des trous de connexion verticaux (23).

4. Appareil de montage de pneumatiques de structure compacte et durable selon la revendication 1, **caractérisé en ce que** l'actionneur est un cylindre pneumatique (14), et un manchon d'arbre (7) au niveau de l'extrémité inférieure d'une tige de piston (9) du cylindre pneumatique (14) est manchonné sur le premier axe de pivot (6).

5. Appareil de montage de pneumatiques de structure compacte et durable selon la revendication 4, **caractérisé en ce que** le manchon d'arbre (7) est connecté au premier axe de pivot (6) par l'intermédiaire d'un palier d'articulation.

6. Appareil de montage de pneumatiques de structure compacte et durable selon la revendication 1, **caractérisé en ce que** l'extrémité inférieure de la structure de plaques de serrage (4) est connectée à une tête de fixation de jante (1) par l'intermédiaire d'un troisième élément de fixation (28).

7. Appareil de montage de pneumatiques de structure compacte et durable selon la revendication 6, **caractérisé en ce que** la tête de fixation de jante (1) est pourvue d'un trou de connexion (27) connecté à l'extrémité inférieure d'un bras mobile.

8. Appareil de montage de pneumatiques de structure compacte et durable selon la revendication 1, **caractérisé en ce que** le corps du cylindre pneumatique (14) est d'un boîtier (17) ; une vanne de commande (24) du cylindre pneumatique (14) est située dans le boîtier (17) ; et un trou de sortie (25) pour une tige d'actionnement (15) de la vanne de commande (24) du cylindre pneumatique (14) et une poignée (16) sont disposés au niveau du boîtier (17).

9. Appareil de montage de pneumatiques de structure compacte et durable selon la revendication 1, **caractérisé en ce que** les surfaces supérieure et inférieure de la portion en forme de crochet du démonte-pneu (2) sont des têtes ovales lisses (19).
